# EUROPÄISCHE PATENTANMELDUNG

(11) **EP 2 409 861 A1**
(43) Veröffentlichungstag der Anmeldung: **25.01.2012**
(21) Anmeldenummer: 11174962.8
(22) Anmeldetag: 22.07.2011
(51) Int. Cl.: B60G 3/14, B60G 11/62, B60G 11/64, B60G 17/016, B60G 17/044, B60G 11/18, B60G 11/22

(54) **Niveauregulierungseinheit**

(30) Priorität: 23.07.2010 DE 202010008145 U
(71) Anmelder: AL-KO Kober AG, 89359 Kötz (DE)
(72) Erfinder: Spiegler, Roland, 89312 Günzburg (DE); Lehner, Helmut, 89359 Kötz (DE)
(74) Vertreter: Ernicke, Hans-Dieter

(57) **Zusammenfassung**

Die Erfindung betrifft eine Niveauregulierungseinheit für ein rahmenartiges Fahrgestell eines Fahrzeugs. Sie betrifft ferner ein rahmenartiges Fahrgestell eines Fahrzeugs, das mit einer solchen Niveauregulierungseinheit ausgestattet ist.

Die Niveauregulierungseinheit (19) weist einen Niveauregler (20) und eine Adaptionseinrichtung (31) auf, die für den Anbau und die Lagerung des Niveaureglers (20) am Fahrgestell (2) und an einem Radschwinghebel (10) vorgesehen und ausgebildet ist.

Die Adaptionseinrichtung (31) weist ein Adaptionselement (22,23,32) auf, das einen Montagebereich (24,35) zur Befestigung am Fahrgestell (2) oder am Radschwinghebel (10) und einen Ausleger (26,38) mit einem Stützelement (27,33) für die Lagerung des Niveaureglers (20) aufweist.

## Beschreibung

Die Erfindung betrifft eine Niveauregulierungseinheit mit den Merkmalen im Oberbegriff des Hauptanspruchs.

Aus der Praxis ist es bekannt, Straßen- und Kraftfahrzeuge mit einem rahmenartigen Fahrgestell, z.B. einem Anbauchassis gemäß der EP 1 506 914 A2 oder EP 1 634 798 A1, mit einer Federachse und einem Stoßdämpfer zu versehen. Die Federachse kann als Gummi- oder Drehstabfederachse bzw. Torsionsfederachse ausgebildet sein und trägt an den Enden Radschwinghebel, an denen die Stoßdämpfer angreifen. Derartige Kraftfahrzeuge sind z.B. Wohnmobile, Verkaufsfahrzeuge oder dgl.

Bei solchen Fahrzeugen besteht bisweilen das Problem einer hecklastigen Gewichtsverteilung, insbesondere mit einer Ausladung bzw. Überladung der Hinterachse. Dies kann zu einem Hängen des Fahrzeughecks führen, was eine Verschlechterung des Böschungswinkels zur Folge hat und außerdem zu einem Absenken des Kupplungspunktes einer Anhängevorrichtung unter das gesetzlich erforderliche Mindestmaß führen kann. Ähnliche Probleme kann es auch bei Fahrzeuganhängern, insbesondere Caravans, Verkaufsanhängern, etc. geben.

In der Praxis hat man eine Lösung des Problems durch Verdrehung der Schwinghebelstellung oder Tausch und Verstärkung der Drehstäbe bei Drehstabfederungen oder durch zusätzliche Federblätter bei Blattfedern versucht. Diese Maßnahmen reduzierten allerdings den Federungs- und Fahrkomfort des Fahrzeugs. Außerdem wurden regulierbare Luftfederungen eingesetzt, die allerdings einen hohen Bau- und Kostenaufwand mit sich brachten.

Von anderen Kraftfahrzeugen, insbesondere von Pkws, sind Niveauregler bekannt, die z.B. als selbstpumpende hydropneumatische Federbeine mit innerer Niveauregelung, z.B. gemäß der DE 199 59 197 A1, oder als Kolben-Zylinder-Aggregate gemäß der DE 10 2008 024 037 A1 oder EP 1 862 337 A1, ausgebildet sind. Die ZF Sachs AG vertreibt einen Niveauregler unter der Bezeichnung NIVOMAT.

Es ist Aufgabe der vorliegenden Erfindung, Verbesserungen für das Feder- und Dämpfungssystem von Fahrzeugen, insbesondere Straßenfahrzeugen der vorgenannten Art, aufzuzeigen.

Die Erfindung löst diese Aufgabe mit den Merkmalen im Hauptanspruch.

Die beanspruchte Niveauregulierungseinheit bietet wesentlich verbesserte Fahr-, Federungs- und Einstellungseigenschaften für ein damit ausgerüstetes Fahrzeug, insbesondere Straßenfahrzeug, wobei auch eine Adaption an unterschiedliche Fahrzeugsituationen, insbesondere unterschiedliche Fahrzeuggewichte, unterschiedliche Fahrgestellhöhenlagen (Tieferlegung etc.), vorhandene Anbauraumbeschränkungen oder dgl. stattfinden kann. Insbesondere kann über eine Adaptionseinrichtung die Ein- und Anbaulage des Niveaureglers an die gegebenen Platz- und Kinematikverhältnisse angepasst werden. Der Niveauregler kann in beliebig geeigneter Lage, insbesondere Schräglage, zum Fahrgestell ausgerichtet werden, wobei auch seine Lagerteile an beliebigen Orten positioniert werden können. Ein Anbau ist auch an Fahrgestellen möglich, die hierfür ursprünglich nicht ausgelegt und vorbereitet waren. Die Niveauregulierungseinheit kann herstellerseitig an einem Fahrgestell bzw. Fahrzeug angebaut oder auch nachgerüstet oder umgerüstet werden.

Die Adaptionseinrichtung weist ein oder mehrere Adaptionselemente, z.B. einen Anbauadapter und/oder eine Schwinghebelkonsole, zur Aufnahme, Positionierung und Abstützung eines Lagerteils des Niveaureglers am Fahrgestell und/oder an einem Radschwinghebel auf. Sie kann Bestandteil eines Baukastensystems sein. Die Adaptionseinrichtung kann den Niveauregler besonders gut am Fahrgestell und/oder am Radschwinghebel abstützen und die Kräfte verformungsgünstig übertragen.

Die beanspruchte Adaptionseinrichtung ermöglicht die optimierte Montage eines Niveaureglers am Fahrzeug und dessen rahmenartigen Fahrgestell. Der Niveauregler kann bei Überschreitung der eingestellten Niveaulage und bei Auftreten entsprechender Achsbelastungen Gegenkräfte entwickeln, welche die Federachse unterstützen und zu einer vorteilhaften Federkennlinie führen. Das Einregeln des Fahrniveaus kann bei jedem Beladungszustand erfolgen. Unterhalb der Niveaulage kann der Niveauregler vor allem als Dämpfer wirken.

Die Kombination einer Federachse mit einem Niveauregler ist für den Federungs- und Fahrkomfort des Fahrzeugs vorteilhaft. Sie ist außerdem hinsichtlich Bau-, Kosten- und Wartungsaufwand günstig, insbesondere gegenüber einer Luftfederung. Ferner wird keine zusätzliche Energie zur Einstellung des Fahrniveaus benötigt. Weitere Vorteile sind eine konstante und verbesserte Bodenfreiheit sowie ein unabgängiger Beladungsausgleich rechts/links. Dank des Anbauadapters besteht eine hohe Flexibilität in der Anpassung an unterschiedliche Fahrzeugsituationen.

Die Adaptionseinrichtung hat den Vorteil, dass sie für die Dämpfung bzw. Federung und für den Wirkungsgrad günstige Einbaulagen des Niveaureglers ermöglicht. Hierbei kann insbesondere der eine fahrgestellseitige Anbindungspunkt für den Niveauregler außerhalb der Kontur eines Längsträgers oder Achsträgers des Fahrgestells gelegt werden. Desgleichen kann der andere Anbindungspunkt am Schwinghebel in seiner Lage gegenüber dort bereits vorhandenen Anbindungsstellen verändert werden. Ein Adaptionselement kann hierfür ein geeignetes Stützelement aufweisen, welches ggf. auch für unterschiedliche Einbaulagen bzw. eine Multifunktionalität mehrmals vorhanden sein kann. Das Fahrgestell und insbesondere der Längsträger kann klein bauen und auf seine Bestimmung optimiert werden, was für die Gestaltungsfreiheit beim Aufbau und für eine hohe Nutzlast von Vorteil ist.

Die Adaptionseinrichtung hat den weiteren Vorteil, dass sie die Verwendung eines einheitlichen Niveaureglers für unterschiedliche Belastungs- und Fahrzeugvorgaben ermöglicht. Zum einen können die Achsbelastungen bzw. die zulässigen Gesamtgewichte des Fahrzeugs variieren. Zum anderen kann das Fahrgestell unterschiedliche Höhenlagen haben, insbesondere wenn es sich um ein tiefergelegtes Anbauchassis wie beim eingangs genannten Stand der Technik handelt. Ferner kann die Grundeinstellung und der Ausrichtwinkel eines Radschwinghebels variiert werden, z.B. durch einen veränderbaren Anbau an der Achse. Diesen unterschiedlichen Gegegebenheiten kann mit einem Baukastensystem Rechnung getragen werden, welches z.B. einen einheitlichen Niveauregler und variable Adaptionseinrichtung, mit mehreren an die verschiedenen Einbaulagen angepasste Adaptionselementen aufweist. Alternativ kann ein Adaptionselement auch unterschiedlich einstellbar sein, indem es z.B. verschiedene Aufnahmen für ein Stützelement aufweist. In einer weiteren Abwandlung kann eine standardisierte Adaptionseinrichtung in Verbindung mit einem einstellbaren Niveauregler eingesetzt werden.

Eine ein- oder mehrteilige Adaptionseinrichtung kann als eigenständiges Teil hergestellt und vertrieben werden. Sie kann auch im Rahmen einer Niveauregulierungseinheit, bestehend aus einem Niveauregler und einer , ggf. im Rahmen eines Baukastensystems, eingesetzt werden. Sie kann ferner in eine modifizierte Feder- und Dämpfungseinrichtung eingebunden werden, bei der die Federachse ebenfalls verändert und an die Gegenwirkung bzw. Federkraft des Niveaureglers angepasst ist, sodass insbesondere bei hohen Achsbelastungen beide zusammenwirken und die nötige Federkraft aufbringen. Hierbei kann insbesondere erreicht werden, dass Überlastungen der Fahrzeugkomponenten und insbesondere auch des Niveaureglers durch Fahrzeugbetreiber vermieden werden, die das Fahrzeug mit ungünstiger oder falscher Gewichtsverteilung belasten oder auch überlasten. Außerdem erlaubt der Niveauregler eine weichere Auslegung der Achsfederung, was dem Fahr- und Federungskomfort zugute kommt.

Die Niveauregulierungseinheit kann für die Erstausrüstung von Fahrzeugen eingesetzt werden, wofür eine Adaption des Radschwinghebels und die Anordnung eines Stützelements für den Niveauregler im Bereich zwischen der Achse und der Radaufnahme von Vorteil ist. In diesem Fall kann der Niveauregler z.B. in Fahrtrichtung hinter der Achse eingebaut werden. Es ist aber auch eine Nachrüstung vorhandener Fahrzeuge unter Austausch des bisherigen reinen Stoßdämpfers durch einen Niveauregler dank der Adaptionseinrichtung möglich.

Die Adaptionseinrichtung hat ferner den Vorteil, dass sie durch ihre optimierte Formgebung einerseits die Stützkräfte auffangen kann und andererseits nur einen geringen Bauraum beansprucht, wobei sie ggf. den Niveauregler bereichsweise aufnehmen und seitlich umgeben kann. Hierdurch kann der knappe Bauraum zwischen Fahrgestell und Fahrzeugrad bzw. Radschwinghebel optimal ausgenutzt werden.

Ein abgewinkelter und entsprechend versteifter, konsolenartiger Korpus eines Adaptionselements, der auch als Stützrahmen, Gestell oder Gehäuse bezeichnet werden kann, hat Vorteile für die Aufnahme und Abstützung der bei der Niveauregulierung und Federung einwirkenden Kräfte sowie deren verformungsarme Übertragung an das Fahrgestell, insbesondere dessen dünnwandigen Längsträger und/oder an den Radschwinghebel. Montageplatten verteilen die eingeleiteten Kräfte und stabilisieren die Montagestelle am Längsträger und/oder am Radschwinghebel. Die Korpusform bietet andererseits Freiräume zur platzsparenden Aufnahme von ausbauchenden Teilen des Niveaureglers, insbesondere eines Zylinders.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: ein Fahrzeug mit einem rahmenartigen Fahrgestell, einer Hinterachse und einer Niveauregulierungseinheit,
- Figur 2:: eine abgebrochene Draufsicht auf ein Fahrgestell mit einer hinteren Achse und einer Niveauregulierungseinheit, die einen Niveauregler und eine Adaptionseinrichtung aufweist,
- Figur 3:: eine Seitenansicht gemäß Pfeil III der Anordnung von Figur 2,
- Figur 4 bis 6:: verschiedene Stellungen eines Radschwinghebels und des Niveaureglers,
- Figur 7 und 8:: eine Variante der Anordnung von Figur 2 und 3,
- Figur 9 bis 11:: verschiedene Stellungen des Radschwinghebels und des Niveaureglers der zweiten Variante,
- Figur 12:: eine Seitenansicht eines Anbauadapters,
- Figur 13 bis 17:: mehrere Varianten eines Anbauadapters in Form und Größe,
- Figur 18:: eine teilweise geöffnete Seitenansicht eines Niveaureglers,
- Figur 19:: eine weitere Variante einer Niveauregulierungseinheit in Seitenansicht,
- Figur 20:: eine perspektivische Ansicht der Niveauregulierungseinheit von Figur 19,
- Figur 21:: eine Draufsicht der Niveauregulierungseinheit gemäß Pfeil XXI von Figur 19,
- Figur 22:: eine Frontansicht der Niveauregulierungseinheit gemäß Pfeil XXII von Figur 19 und
- Figur 23 und 24:: eine Schwinghebelkonsole in verschiedenen Ansichten.

Die Erfindung betrifft eine Adaptionseinrichtung (31) für den Anbau eines Niveaureglers (20). Sie betrifft ferner eine von einer Adaptionseinrichtung (31) und einem Niveauregler (20) gebildete Niveauregulierungseinheit (19). Betroffen ist weiter eine Feder- und Dämpfungseinrichtung (17), die eine solche Niveauregulierungseinheit (19) und ggf. auch eine Achse (8) einschließt. Die Erfindung betrifft außerdem ein damit ausgerüstetes Fahrgestell (2) und ein Fahrzeug (1).

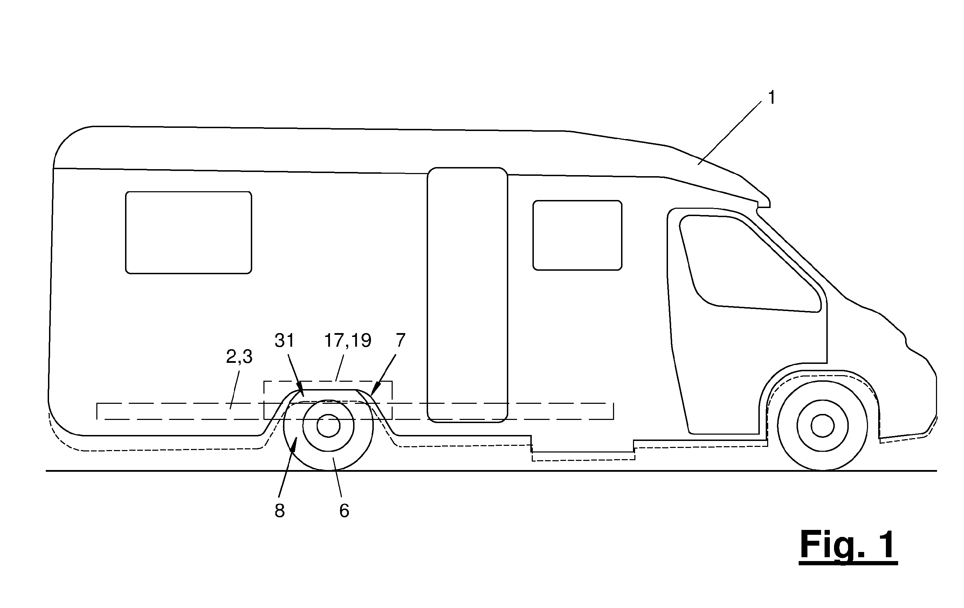

In Figur 1 ist ein solches Fahrzeug (1) schematisch dargestellt. Das Fahrzeug (1) ist vorzugsweise ein Straßenfahrzeug, das zum Befahren befestigter Straßen vorgesehen und ausgelegt ist.

Es kann sich um ein Kraftfahrzeug handeln, das z.B. als Wohnmobil bzw. Caravan, Verkaufswagen, Eventfahrzeug oder dgl. ausgebildet ist und ein in Figur 1 schematisch dargestelltes rahmenartiges Fahrgestell (2) mit Längsträgern (3) aufweist. Das Fahrzeug (1) kann einen Frontantrieb sowie einen Aufbau haben, welcher z.B. in der dargestellten Weise kastenförmig gestaltet ist. Es kann sich um einen integralen Aufbau handeln, der auch die Fahrerkabine einschließt. Ansonsten kann der Aufbau eine beliebige andere Gestalt haben und anderen Zwecken dienen, z.B. als Pritschenaufbau, Verkaufsstand, Kofferaufbau mit oder ohne Kühlung, Tiertransporter, Autotransporter oder dgl. Alternativ kann das Fahrzeug (1) ein Anhänger sein, der von einem Zugfahrzeug geschleppt wird und eine Deichsel mit einer Anhängerkupplung aufweist.

Das Fahrzeug (1) hat eine Achse (8), insbesondere eine hintere Achse, die als Einzelachse oder ggf. auch mehrfach z.B. als Tandemachse, Tridemachse oder dgl. vorhanden sein kann. Ferner besitzt das Fahrzeug (1) in diesem Achsbereich, insbesondere Hinterachsbereich, eine Feder-und Dämpfungseinrichtung (17), die eine Niveauregulierungseinheit (19) beinhaltet.

Die Achse (8) ist z.B. eine geschleppte Achse, die nicht mit einem motorischen Fahrzeugantrieb für den normalen Fahrbetrieb treibend verbunden ist. Eine solche Achse (8) kann eine Hinterachse eines Kraftfahrzeugs mit Frontantrieb oder eine Anhängerachse sein. Bei einer Anhängerachse kann ggf. ein an die Räder oder Naben zustellbarer Fahrhilfsantrieb oder Rangierantrieb, ggf. mehrfach, vorhanden sein.

Figur 1 zeigt mit durchgezogenen Strichen das Fahrzeug (1) mit einer angedeuteten Feder-und Dämpfungseinrichtung (17) in einer normalen Belastungsstellung mit gleichmäßig verteilten Achsbelastungen. Mit gestrichelten Linien ist der Fall einer Überlastung oder einer ungünstigen und insbesondere heckseitigen Lastverteilung angedeutet, bei dem der hintere Fahrzeugbereich durch ein übermäßiges Einfedern einer konventionellen Feder-und Dämpfungseinrichtung nach unten sacken könnte. Mit einer nachfolgend erläuterten Niveauregulierungseinheit (19) wird dieser Fahrzeugzustand vermieden.

Die Niveauregulierungseinheit (19) weist einen Niveauregler (20) und eine Adaptionseinrichtung (31) für dessen Montage am Fahrgestell (2) auf. Die Adaptionseinrichtung (31) kann ein oder mehrere Adaptionselemente (22,23,32) aufweisen.

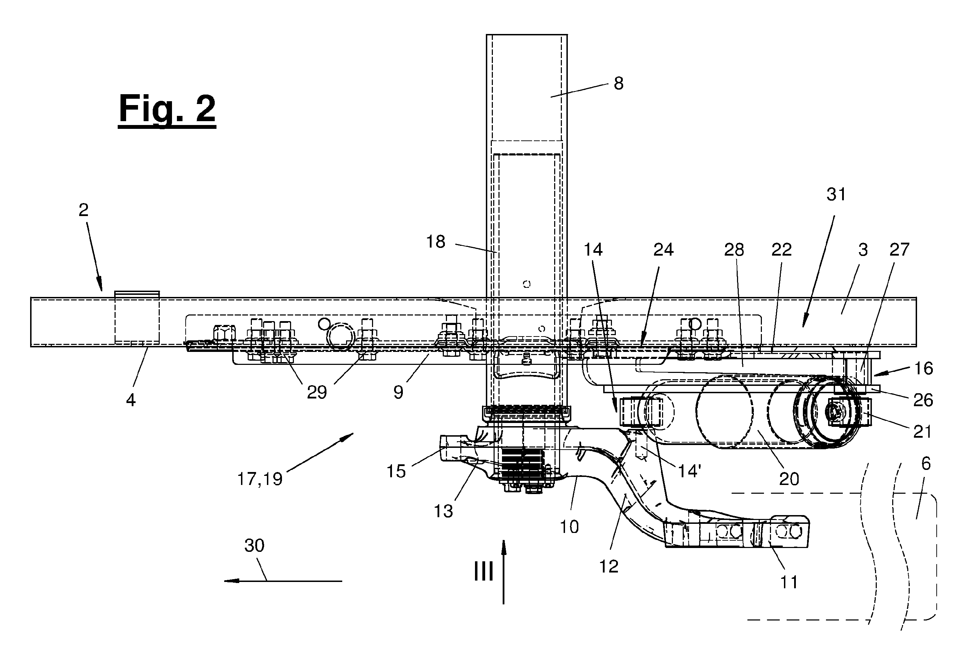

In den Ausführungsformen von Figur 2 bis 17 weist die Adaptionseinrichtung (31) jeweils ein einzelnes Adaptionselement (22,23) auf, das zum Anbau des Niveaureglers (20) und dessen einem oberen Lagerteil (21) am Fahrgestell (2) dient. Das Adaptionselement (22,23) wird nachfolgend als Anbauadapter (22,23) bezeichnet.

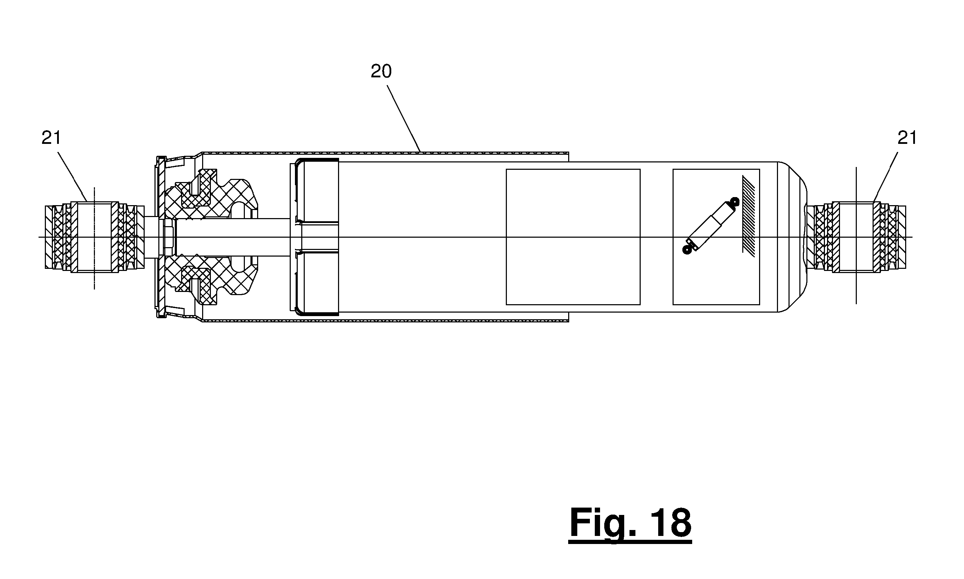

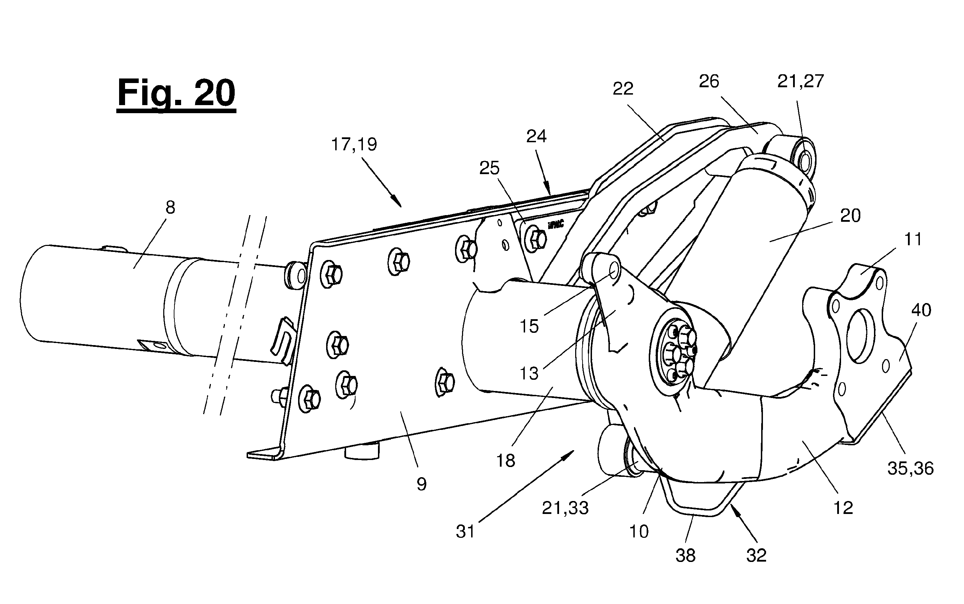

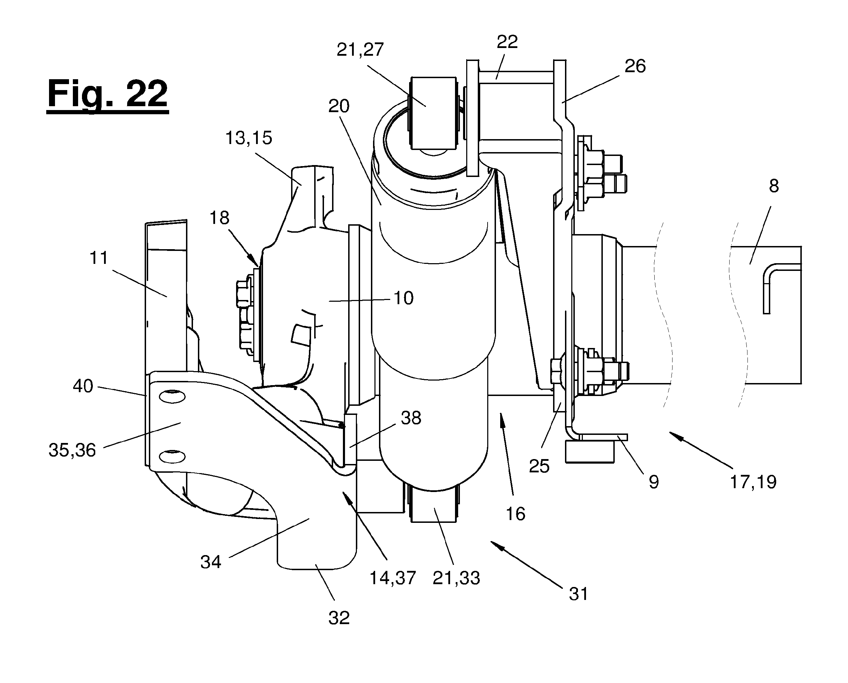

In den Ausführungsformen von Figur 18 bis 24 weist die Adaptionseinrichtung (31) jeweils mehrere, insbesondere zwei Adaptionselemente (22,23,32) auf. Das eine Adaptionselement (22,23) ist ein vorgenannter Anbauadapter für den Anbau am Fahrgestell (2). Das andere Adaptionselement (32) dient zum Anbau des Niveaureglers (20) und dessen einem unteren Lagerteil (21) an einem Radschwinghebel (10) und ist z.B. als Schwinghebelkonsole ausgebildet.

Die Feder- und Dämpfungseinrichtung (17) besteht z.B. aus einer Federachse (8) mit Radschwinghebeln (10) und zwei Niveauregulierungseinheiten (19). Sie kann bei Anordnung mehrerer Achsen mehrfach vorhanden sein.

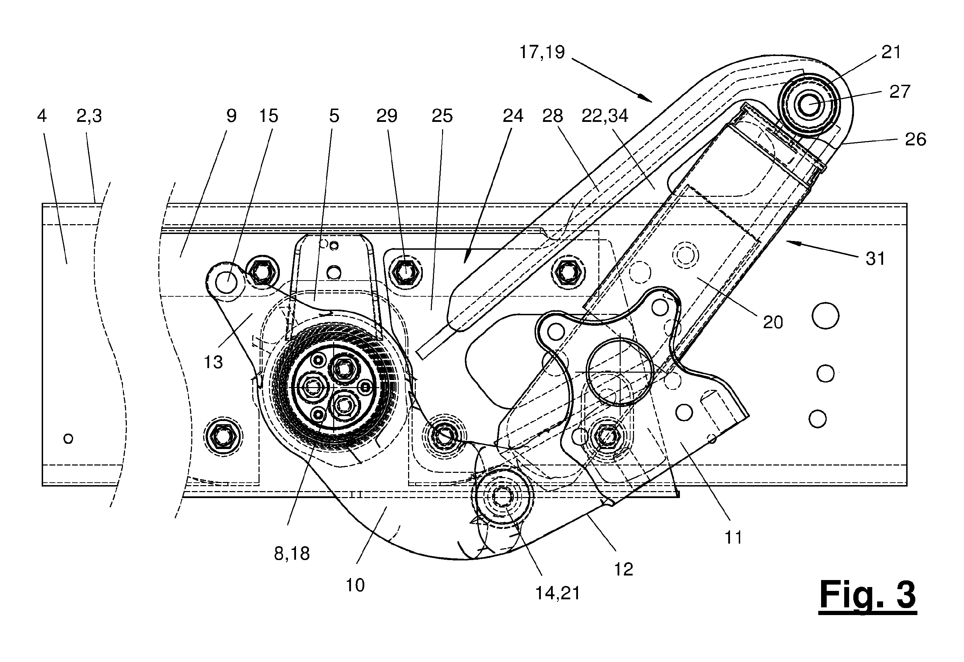

Die Feder- und Dämpfungseinrichtung (17) weist eine Achsfederung (18) auf, die z.B. als vorzugsweise integrierte Drehstabfeder oder Torsionsfeder oder auch als Gummifeder der Achse (8) ausgebildet ist. Die Achse (8) kann eine sog. Federachse sein. Sie weist an beiden Enden angeschlossene Radschwinghebel (10) auf, die z.B. mit der Achsfederung (18) verbunden sind. Es kann sich um eine Längslenker- oder Schräglenkerachse handeln. Die Radschwinghebel (10) sind entsprechend ausgerichtet. Figur 2 und 3 verdeutlichen eine erste Variante einer Adaptionseinrichtung (31) und ihres Anbauadapters (22), einer Niveauregulierungseinheit (19) und einer Feder- und Dämpfungseinrichtung (17).

Der Niveauregler (20) wird anstelle eines konventionellen Stoßdämpfers eingesetzt. Er dient dazu, das Fahrniveau der Hinterachse (8) vor Erreichen der maximal zulässigen Hinterachslast sowie über diese hinaus konstant zu halten und das Fahrgestell (2) in einer vorgegebenen Höhe und waagerecht auszurichten. Der Niveauregler (20) kann z.B. ein NIVOMAT der ZF Sachs AG sein oder kann als Kolben-Zylinder-Aggregat gemäß der eingangs genannten DE 10 2008 024 037 A1 oder EP 1 862 337 A1 oder auch als selbstpumpendes hydropneumatisches Federbein mit innerer Niveauregelung nach der DE 199 59 197 A1 oder in sonstiger geeigneter Weise ausgebildet sein.

Figur 18 zeigt schematisch den Aufbau eines solchen Niveaureglers (20) mit einem Kolben-Zylinder-Aggregat nebst Schutzrohr und zwei endseitigen Lagerstellen mit Lagerteilen (21). Der Niveauregler (20) ist als Kompaktgerät ausgebildet, in dem alle Elemente wie Kolbenstange, Ölreservoir, Hochdruck-Gasspeicher, Pumpe mit Pumpraum, Pumpenstange sowie Ein- und Auslassventil, Höhensensor, Regelmechanismus mit Abregelbohrung und Dämpfungseinheit des selbstpumpenden hydropneumatischen Niveauregelsystems vollständig integriert sind. Die notwendige Energie zur Einstellung des optimalen Fahrzeugniveaus wird aus den Relativbewegungen zwischen Achse (8) und Fahrzeugaufbau gewonnen. Je nach Fahrbahnbeschaffenheit erreicht das Fahrzeug mit voller Zuladung schon nach wenigen hundert Metern Fahrstrecke seine Normalhöhe. Die Länge des Niveaureglers (20), insbesondere der Abstand zwischen den endseitigen Lagerteilen (21) kann veränderlich sein, indem z.B. ein Lagerteil (21) mit der Kolbenstange über ein Stellgewinde verbunden ist.

Nach dem Beladen ist eine Spiralnut vom Pumpraum zum Hochdruckraum im Niveauregler (20) geschlossen. Im Fahrbetrieb kann der Niveauregler (20) durch die Fahrzeugschwingungen pumpen, was zu Druckaufbau für mehr Tragkraft führt und die Achsfederung (18) unterstützt. Das Fahrgestell (2) wird angehoben bis die Spiralnut wieder offen ist. In der gewünschten Niveaulage ist die Spiralnut zwischen Pumpraum und Hochdruckraum offen. Durch den Kurzschluss wird keine Pumparbeit geleistet. Nach dem Entladen hebt sich das Fahrgestell (2) bis eine Ablassbohrung frei ist. Beim Fahren ergeben sich Relativbewegung um die Ablassbohrung herum und ein Ölfluss vom Hochdruckraum zum Ölreservoir mit der Folge, dass das Fahrgestell (2) sich absenkt.

In der gezeigten Ausführungsform hat der Niveauregler (20) z.B. eine fest eingestellte Einfahrlänge, bis zu deren Erreichen der Niveauregler (20) hauptsächlich eine Dämpferfunktion erfüllt. Sobald die vorgegebene Einfahrlänge erreicht ist, übernimmt der Niveauregler bei weiterer Achslasterhöhung einen daraus resultierenden Traganteil und entwickelt eine Gegen- oder Stützkraft, um das Fahrniveau konstant zu halten. Er wirkt dabei auch weiterhin als Dämpfer, wobei er zugleich aber Lastanteile für die Federkraft entwickelt und mit der Achsfederung (18) zusammenwirkt. Die Einbaulage des Niveaureglers (20) wird derart gewählt, dass bei der vorgegebenen Einfahrlänge das gewünschte Fahrniveau erreicht ist.

Bei dem Fahrzeug (1) können Last- und Fahrzustände variabel sein. Das Fahrzeug (1) kann z.B. bei gleicher Fahrwerks- und Achsgeometrie für unterschiedliche zulässige Gesamtgewichte ausgelegt sein. Ferner kann die Höhe des Fahrgestells (2) und seiner Längsträger (3) über dem Boden variieren. Das Fahrgestell (2) kann insbesondere in der Ausbildung als Anbauchassis mittels eines Adapters gegenüber dem Fahrgestell eines Zugkopfes mit Frontantrieb tiefergelegt und abgesenkt sein, wie dies z.B. in der EP 1 506 914 A2 oder EP 1 634 798 A1 beschrieben ist. Entsprechend dieser unterschiedlichen Fahrgestellhöhen und zulässigen Gesamtgewichte bzw. der daraus resultierenden Achslast können sich das gewünschte Fahrniveau, die Federwege sowie die Grundeinstellung und insbesondere der Grund-Einstellwinkel des Radschwinghebels (10) ändern.

Für den Anbau des Niveaureglers (20) ist ein Anbauadapter (22,23) vorgesehen, über den der Niveauregler (20) an seiner einen endseitigen gelenkigen Lagerstelle (21) mit dem Fahrgestell (2) verbunden werden kann. Am anderen Ende ist er mit dem Radschwinghebel (10) gelenkig verbunden. Der Anbauadapter (22,23) bestimmt zusammen mit dem Radschwinghebel (10) die Einbaulage des Niveaureglers (20) und deren Abstimmung mit dem gewünschten Fahrniveau.

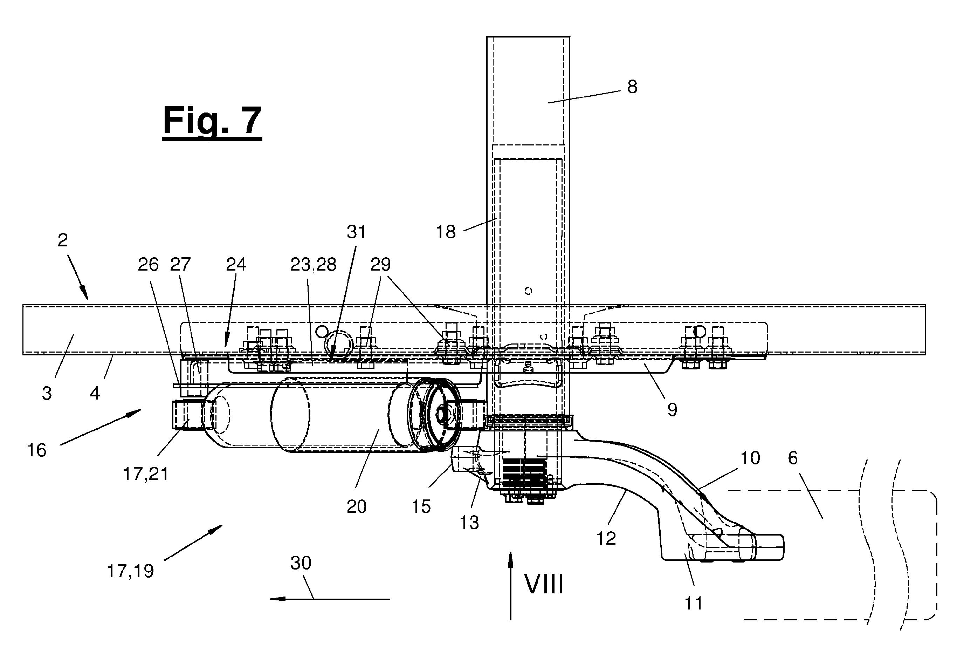

Die erste Variante von Figur 2 bis 6 zeigt eine Ausführungsform, die z.B. für einen Werkseinbau oder eine Erstausrüstung beim Fahrzeughersteller vorgesehen ist. Hier ist der Niveauregler (20) und der Anbauadapter (22) in Fahrtrichtung (30) gesehen hinter der Achse (8) angeordnet. In der anderen Variante von Figur 7 bis 11, die sich z.B. für eine Nachrüstung eignet, ist der Niveauregler (20) und der entsprechend angepasste Anbauadapter (23) in Fahrtrichtung (30) vor der Achse (8) angeordnet.

Das rahmen- oder leiterartige Fahrgestell (2) weist in allen Fällen mindestens zwei parallele Längsträger (3) und ggf. auch ein oder mehrere Querträger auf. Die Längsträger (3) sind als dünnwandige und abgekantete Blechprofile ausgebildet, die z.B. im Querschnitt eine Z-,S-,C- oder L-Form haben und die zumindest einen aufrechten, insbesondere senkrechten, Mittelsteg (4) besitzen. Am oberen und/oder unteren Stegrand kann ein Quergurt angeordnet sein. Die Achse (8) kann am Längsträger (3) in beliebig geeigneter Weise, z.B. durch einen Achsträger (9), insbesondere einen sog. Achsbock, befestigt sein. Hierfür sind geeignete Befestigungsmittel (29), z.B. Schrauben, vorgesehen. Der Längsträger (3) kann einen Achsausschnitt (5) zur Aufnahme des Achsrohrs aufweisen, der z.B. nach unten offen ist und ggf. vom beidseitig angeschraubten Achsträger (9) überbrückt wird.

Der Anbauadapter (22,23) dient dazu, den Niveauregler (20) in der gewünschten Einbaulage mit dem Achsträger (9) oder dem Längsträger (3), insbesondere mit dessen Mittelsteg (4), zu verbinden. Der Anbauadapter (22,23) hat einen abgewinkelten Korpus (34), der die bei der Niveauregulierung einwirkenden Kräfte und Momente aufnimmt und flächig verteilt am dünnwandigen Mittelsteg (4) des Längsträgers (3) und/oder Achsträgers (9) einleitet und abstützt, wobei dort unerwünschte Verformungen vermieden oder zumindest wesentlich gemindert werden. Der Korpus (34) kann eine in sich versteifte Konsole oder einen formstabilen Stützrahmen bilden. Der Korpus (34) kann längs und quer versteift sein sowie eine Torsions- oder Verwindungssteifigkeit aufweisen.

Der Anbauadapter (22,23) weist einen Montagebereich (24) zur Befestigung am Längsträger (3) oder Achsträger (9) und einen Ausleger (26) mit einem Stützelement (27) für die Lagerung des Niveaureglers (20) auf. Das Stützelement (27) kann z.B. als quer vom Ausleger (26) abstehender Zapfen ausgebildet sein, der mit einem endseitigen Lagerteil (21), z.B. einem Lagerauge, des Niveaureglers (20) verbunden wird.

Wie Figur 2, 7 und 12 verdeutlichen, werden der Niveauregler (20) und der jeweilige Anbauadapter (22,23) in einem Zwischenraum (16) zwischen dem gestrichelt angedeuteten Fahrzeugrad (6) und dem Längsträger (3) eingebaut. In der Variante von Figur 2 bis 6 befinden sich diese Teile (20,22) außerdem in einem Zwischenraum (16) zwischen einer endseitigen Radaufnahme (11) des Radschwinghebels (10) und dem Längsträger (3).

Der Ausleger (26) kann in Anbaustellung über die Außenkontur des Längsträgers (3) oder des Achsträgers (9) reichen. Hierdurch kann das Stützelement (17) in einem Bereich außerhalb dieser Kontur angeordnet sein. Durch den Anbauadapter (22,23) kann die Einbaulage des Niveaureglers (20) günstig gewählt werden. Der Niveauregler (20) hat in der Einbaulage eine auf die Fahrzeugsituation und den Federweg abgestimmte Einbaulänge und Schrägausrichtung zum Längsträger (3).

Der Montagebereich (24) des Anbauadapters (22,23) ist an den Längsträger (3) oder den Achsträger (9) angepasst. Insbesondere kann der Montagebereich (24) an vorhandene Befestigungsmittel (29) des Längsträgers (3) oder des Achsträgers (9) und an deren Verteilung bzw. Lochbild adaptiert sein. Außerdem ist der Anbauadapter (22,23) in der Dicke an den besagten Zwischenraum (16) adaptiert.

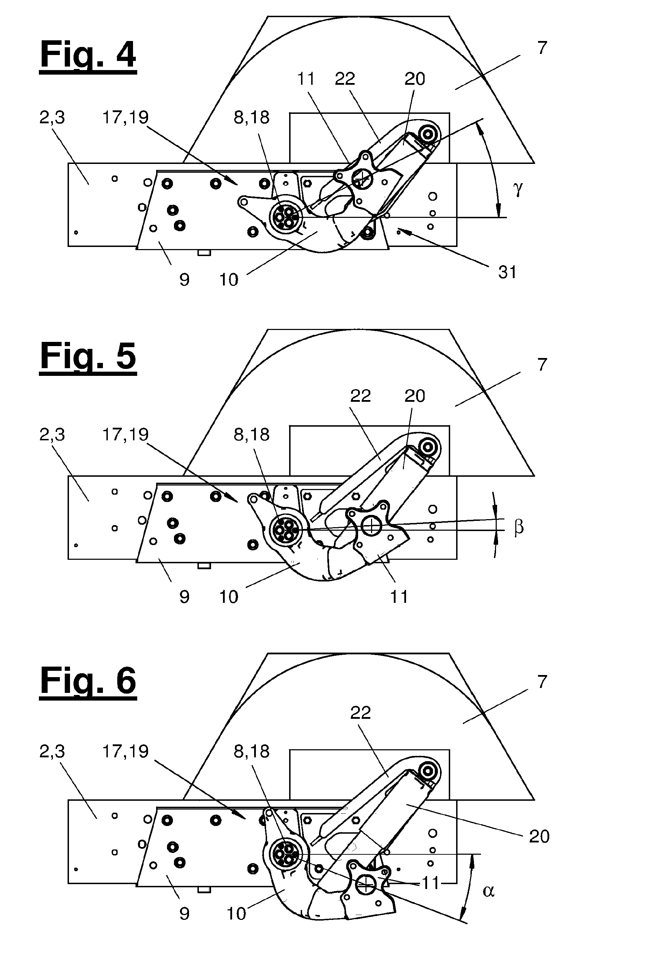

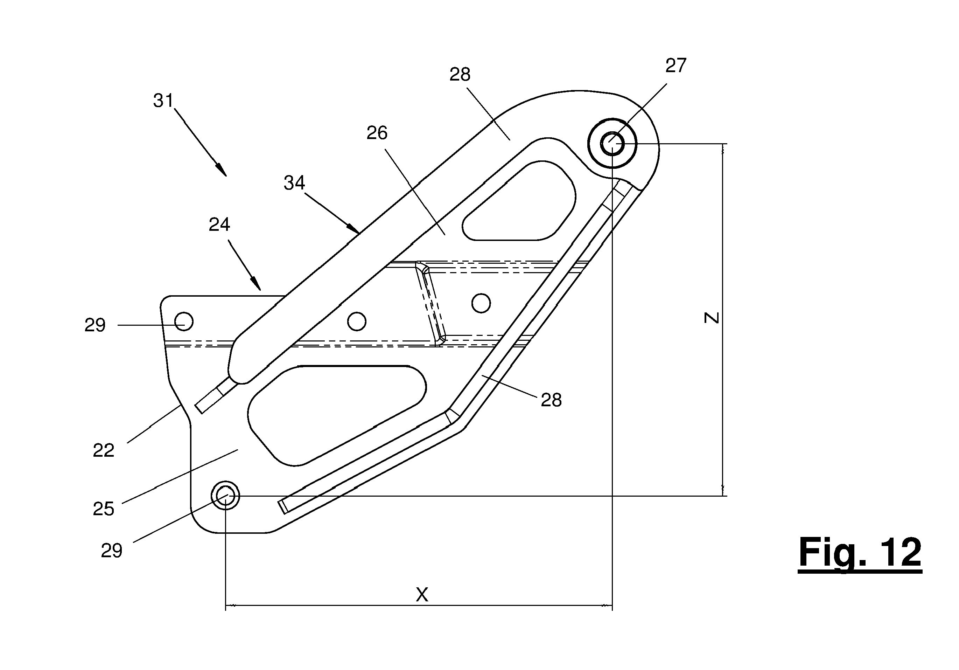

Wie Figur 12 verdeutlicht, ist der Montagebereich (24) z.B. als Montageplatte (25) ausgebildet, die außenseitig plan am Achsträger (9) oder am Längsträger (3) angelegt und befestigt werden kann. Sie kann ggf. auch Abkantungen, Prägungen, Ausnehmungen oder dgl. Formmerkmale haben. Der Ausleger (26) kann an die Montageplatte (25) angesetzt oder in diese integriert sein. In der Variante von Figur 2, 3 und 12 ist der Ausleger (26) z.B. bügelförmig ausgebildet und an der Montageplatte (25) angesetzt. Er kann hier z.B. mit seinen freien Enden befestigt, z.B. angeschweißt sein. Die Montageplatte (25) ist mit den vorhandenen Befestigungsmitteln fixiert, insbesondere angeschraubt und hat hierfür das gezeigte entsprechende Lochbild (29). In dieser Ausführungsform erstreckt sich der Ausleger (26) schräg nach oben über den oberen Rand des Längsträgers (3) bzw. Mittelstegs (4) hinaus und ragt in den freien Raum eines Radhauses (7) des Fahrzeugs (1), wie dies z.B. in Figur 4 bis 6 dargestellt ist.

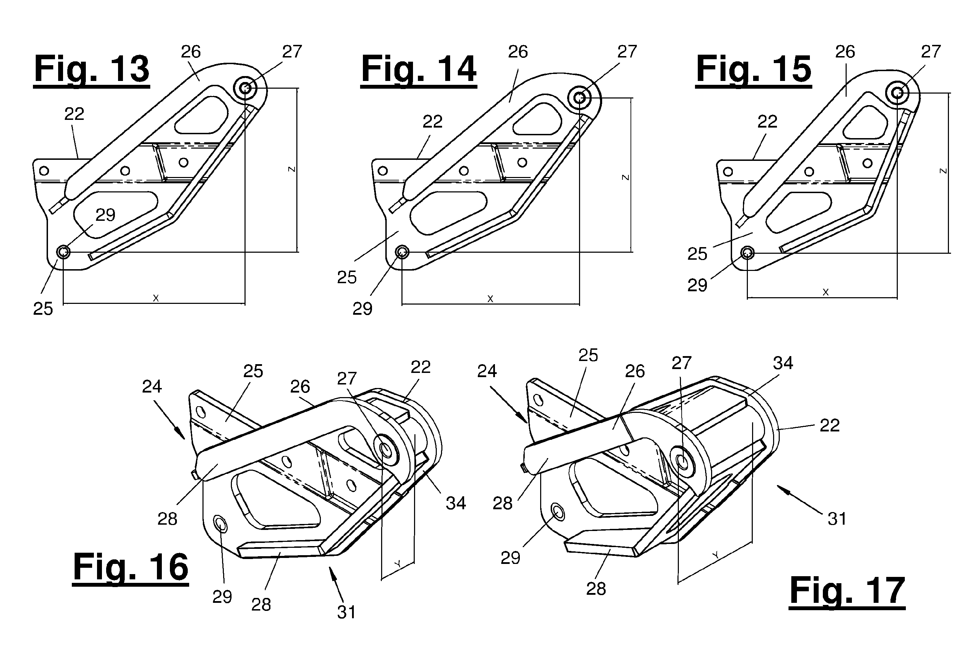

Die Montageplatte (25) und/oder der Ausleger (26) des vorzugsweise aus Metall bestehenden Anbauadapters (22,23) können eine randseitige Versteifung (28) aufweisen, um Seitenkräfte besser aufnehmen zu können. Die Versteifung (28) kann als Randwulst, Randabkantung, angeschweißtes Verstärkungs-Blechprofil, Profilrahmen oder dgl. ausgebildet sein. Figur 16 und 17 zeigen z.B. einen Profilrahmen.

Die Formgebung, insbesondere die wannenartige Kontur des Anbauadapters (22,23) und seiner Bestandteile ist vorzugsweise so gewählt, dass der Niveauregler (20) zumindest bereichsweise seitlich vom Anbauadapter (22,23), z.B. von dessen seitlich vorspringender Versteifung (28), umgeben ist. Hierdurch kann der enge Zwischenraum (16) optimal ausgenutzt werden.

In der Variante von Figur 2 bis 6 hat der Radschwinghebel (10) eine spezielle angepasste Form. Er weist einen ersten und vorzugsweise langen Hebelarm (12) auf, der sich von der Anschlussstelle der Achse (8) ausgehend zu einer am anderen Ende angeordneten Radaufnahme (11) mit einem dortigen z.B. flanschartigen Montagebereich (40) erstreckt. Der Radschwinghebel (10) kann in der in Figur 3 gezeigten Stirnansicht in Längsrichtung der Achse (8) gesehen eine nach unten gebogene Form aufweisen. In der Draufsicht von Figur 2 gesehen zeigt der Radschwinghebel (10) mit seinem Hebelarm (12) eine abgekröpfte Form und kann im mittleren Bereich verstärkt und verdickt sein. Hier kann für die gezeigte Variante eine Anbindungsstelle (14) für den Niveauregler (20) vorhanden sein. Dies kann z.B. ein Zapfen (14') sein, der an der zum Längsträger (3) weisenden und vorzugsweise ebenen Hebelarminnenseite angeordnet ist und der in Richtung zum Längsträger (3) vorspringt. An diesem Zapfen (14') kann ein Lagerteil (21), insbesondere ein Lagerauge des Niveaureglers (20) befestigt sein. Der Zapfen (14') kann fest oder lösbar mit dem Hebelarm (12) verbunden, z.B. angeformt, angeschweißt oder angeschraubt sein. Die Anbindungsstelle (14) befindet sich im abgesenkten Biegungsbereich des Hebelarms (12) und ist auch im Bereich der vorerwähnten Hebelarmverstärkung angeordnet.

Der Radschwinghebel (10) kann jenseits der Achse (8) noch einen weiteren Hebelarm (13) aufweisen, der kürzer als der Hebelarm (12) sein kann und der eine weitere Anbindungsstelle (15), z.B. ein Auge, tragen kann.

Der so gestaltete Radschwinghebel (10) ist in unterschiedlicher Weise verwendbar. Er kann z.B. für die Erstausrüstung und den heckseitigen Anbau des Niveaureglers (20) vorgesehen und ausgebildet sein. Der Radschwinghebel (10) lässt sich aber auch für konventionelle Feder- und Dämpfungssysteme einsetzen, wobei statt des Niveaureglers (20) ein normaler Stoßdämpfer zum Einsatz kommt, der dann z.B. in üblicher Weise am kurzen Hebelarm (13) bzw. der Anbindungsstelle (15) angeschlossen werden kann. Der Montagebereich (40) an der Radaufnahme (11) kann z.B. für den Anbau einer Luftfeder oder für die nachfolgend beschriebene Schwinghebelkonsole (32) dienen. Insofern kann der Radschwinghebel (10) eine eigenständige erfinderische Bedeutung haben.

Bei einer Feder- und Dämpfungseinrichtung (17) kann auch die Achsfederung (18) geändert und angepasst werden, wenn ein Niveauregler (20) vorhanden ist. Insbesondere kann die Achsfederung (18), z.B. eine Drehstabfederung, weicher oder schwächer gemacht werden, wobei der Niveauregler (20) nach Erreichen der vorbestimmten Einfahrlänge und des betreffenden Fahrniveaus Lasten aufnimmt und Stütz- und Gegenkräfte entwickelt. Die Achsfederung (18) muss dann nicht mehr alleine die Federkraft aufbringen. Bis zum Erreichen des vorgegebenen Fahrniveaus federt die Federachse (8) weicher und komfortabler, wobei ab diesem Fahrniveau der Niveauregler (20) lasttragend wirksam wird und die Federwirkung verstärkt. Das Fahrniveau und die vorgegebene Einfahrlänge werden so gewählt, dass der Niveauregler (20) auch bei Überschreiten der Vorgabe von Achslast oder Fahrzeuggewicht nicht überlastet wird und Pufferkapazität hat.

Figur 4 bis 6 zeigen verschiedene Drehstellungen des Radschwinghebels (10) und zugehörige Betriebsstellungen des Niveaureglers (20) zu der Ausführungsform von Figur 2 und 3. Figur 6 zeigt die entlastete Ausgangslage, in der der Radschwinghebel (10) mit seiner Radaufnahme (11) nach unten geschwenkt ist und der Niveauregler (20) weit ausgefahren ist. In dieser entlasteten Position befindet sich die zentrale Raddrehachse der Radaufnahme (11) unterhalb des Zentrums der Achse (8), wobei ein großer Winkel α zwischen der Horizontalen durch das Zentrum der Achse (8) und einer Verbindungslinie zwischen diesem Zentrum und dem Zentrum der Radaufnahme (11) besteht.

Figur 5 zeigt die eingefederte Stellung bei Erreichen der vorbestimmten Niveaulage. Der Anbauadapter (22) ist in seiner Geometrie und insbesondere in der Lage des Stützelements (17) so ausgerichtet, dass in dieser Stellung die vorgegebene Einfahrlänge des Niveaureglers (20) erreicht ist. Der Radschwinghebel (10) ist dabei um die Achse (8) nach oben geschwenkt, wobei das Zentrum der Radaufnahme (11) oberhalb des Zentrums der Achse (8) zu liegen kommt und der Winkel **β** negativ wird.

Figur 4 zeigt die voll eingefederte Lage des Radschwinghebels (10) und des Niveaureglers (20), wobei der Winkel **β** sich weiter vergrößert hat zum Winkel **γ**. Hierbei ist die voreingestellte Niveaulage überschritten.

Figur 7 bis 11 zeigen eine zweite Variante der Niveauregulierungseinheit (19) und der Feder- und Dämpfungseinrichtung (17), die z.B. für eine Nachrüstung eines Niveaureglers (20) anstelle eines bisher vorhandenen Stoßdämpfers an einem vorhandenen Fahrzeug und einer vorhandenen Achse (8) vorgesehen ist. Der Radschwinghebel (10) hat hier eine konventionelle Formgebung und besitzt einen normalen langen Hebelarm (12), der sich zwischen der Achse (8) und der Radaufnahme (11) erstreckt sowie einen kürzeren Hebel (13), der jenseits der Achse (8) angeordnet und etwa im rechten Winkel zum Hebelarm (12) ausgerichtet ist. Die Anbindungsstelle (15) war bisher für den Stoßdämpfer vorgesehen und wird nun für die Lagerung des Niveaureglers (20) benutzt.

In der zweiten Variante ist der Anbauadapter (23) vor der Achse (8) angeordnet und z.B. am Achsträger (9) befestigt. Er weist einen Montagebereich (24) mit einer Montageplatte (25) auf, die an vorhandenen Befestigungsmitteln (29) fixiert ist. Der Ausleger (26) ist hier in die Montageplatte (25) integriert und steht nach unten über die Kontur des Längsträgers (3) vor. Die Montageplatte (25) besitzt randseitige Verstärkungen (28), die zum auslegerseitigen Stützelement (27) hin pfeilförmig verlaufen. Auch hier nimmt der Anbauadapter (23) mit seiner wannenartigen Kontur den Niveauregler (20) auf.

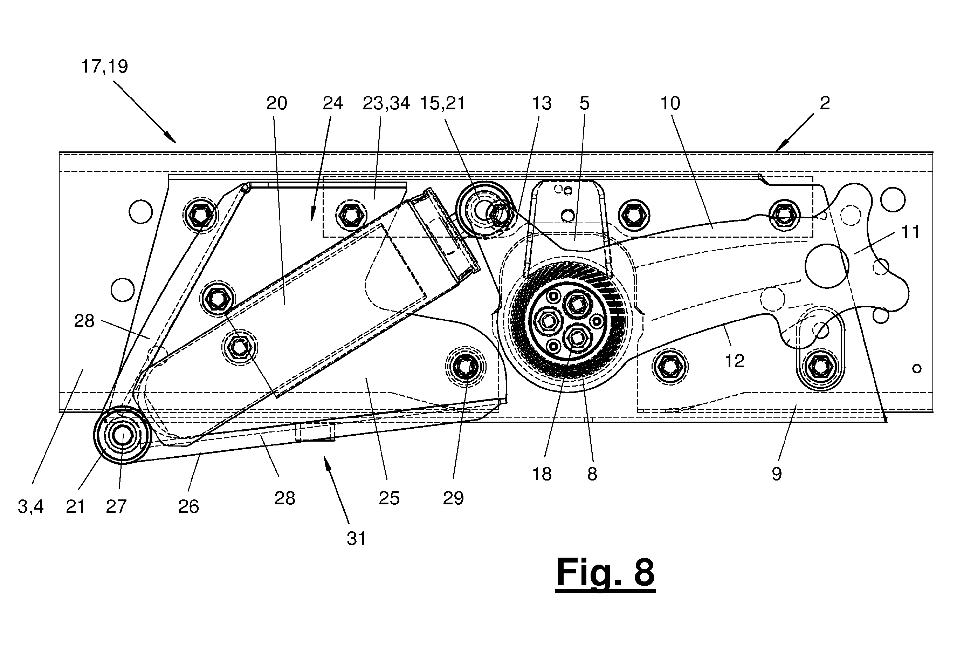

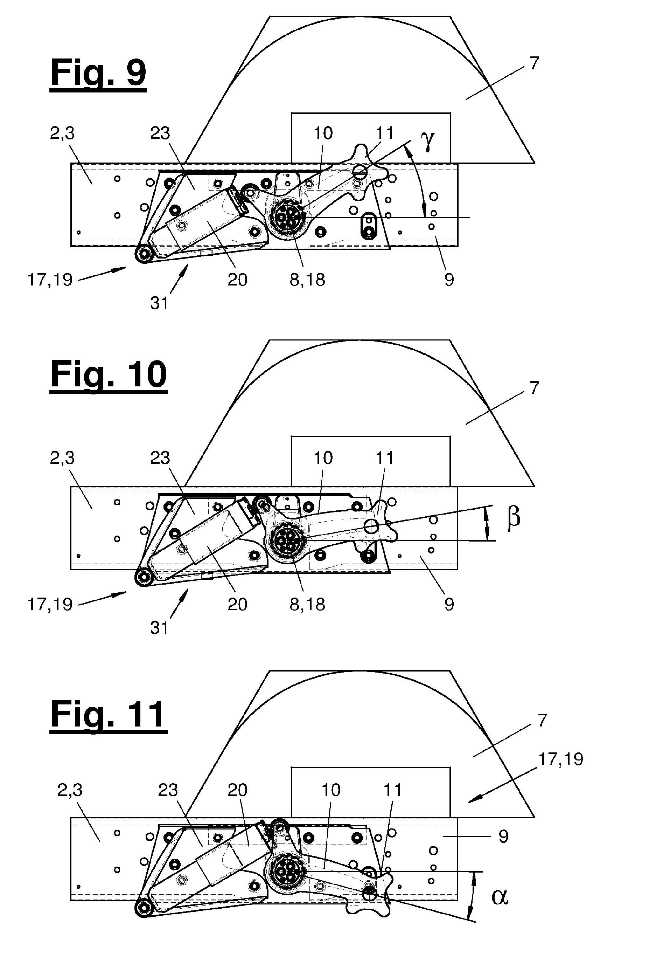

Figur 9 bis 11 zeigen zu dieser zweiten Variante von Figur 7 und 8 ebenfalls verschiedene Betriebsstellungen. In Figur 11 ist die entlastete Hebelstellung gezeigt, in der die Radaufnahme (11) um eine Winkel **α** von z.B. ca. 15° gegenüber der Achse (8) nach unten geschwenkt ist. Im gewünschten Fahrniveau gemäß Figur 10 ist der Radschwinghebel (10) eingefedert, wobei die Radaufnahme (11) um einen negativen Winkel **β** von z.B. ca. 10° über der Achse (8) steht. In der voll eingefederten Stellung von Figur 9 beträgt der vergrößerte negative Hebelwinkel **γ** zur Achse (8) ca. 30°.

Die Niveauregulierungseinheit (19) kann als Baukastensystem ausgebildet sein, mit dem verschiedene Fahrgestellhöhen und Fahrzeuggewichte bzw. Achslasten bedient werden können. In diesem Baukastensystem wird vorzugsweise ein einheitlicher kostengünstiger Niveauregler (20) mit einer für alle Anbausituationen gleichen Einfahrlänge bzw. Niveauregulierung eingesetzt, wobei unterschiedliche Anbauadapter (22,23) eingesetzt werden, die den verschiedenen Fahrgestellhöhen und Fahrzeuggewichten bzw. Achslasten und den hieraus sich ergebenden Grundstellungen und Schwenkwinkeln des Radschwinghebels (10) Rechnung tragen. Die Lage des Stützelements (17) und die Einbaulage des Niveaureglers (20) kann hierdurch entsprechend angepasst werden.

Figur 13 bis 17 zeigen hierzu verschiedene Abwandlungen der Adapterform. Ausgehend von der einen Befestigungsstelle (29), die z.B. einen Bezugspunkt definiert, kann sich gemäß Figur 13 bis 15 die Lage des Stützelements (27) in der Richtung der x- und/oder z-Achse verändern, wodurch sich unterschiedliche Einbaulagen des Niveaureglers (20) ergeben. Ferner kann gemäß Figur 16 und 17 die Breite des Auslegers (26) oder der Versteifung (28) in Richtung der y-Achse ändern. Die x-Achse ist z.B. die horizontale Raumachse in Fahrzeuglängs- und Fahrtrichtung (30). Die y-Achse bezieht sich auf die horizontale Raumachse quer zur Fahrzeuglängsrichtung. Die z-Achse ist als vertikale Raumachse definiert.

Ferner ist es möglich, die Grundeinstellung des Radschwinghebels (10) gegenüber der Achse (8) und der Achsfederung (18) zu verändern, wodurch ebenfalls eine Anpassung an unterschiedliche Fahrgestellhöhen und Gewichts- bzw. Belastungssituationen erreicht werden kann. Dementsprechend ändern sich die Federwege und die Schwenkwinkel des Radschwinghebels (10) sowie die betreffenden Auszuglängen des Niveaureglers (20). Hierbei wird angestrebt, dass das betreffende Fahrgestellniveau in Horizontallage beibehalten werden kann. Variabel können außerdem die Radgrößen sein, was sich ebenfalls auf die Stellung des Radschwinghebels (10) und die entsprechende Anbausituation des Niveaureglers (20) auswirkt und eine Anpassung über den Anbauadapter (22,23) erfordert.

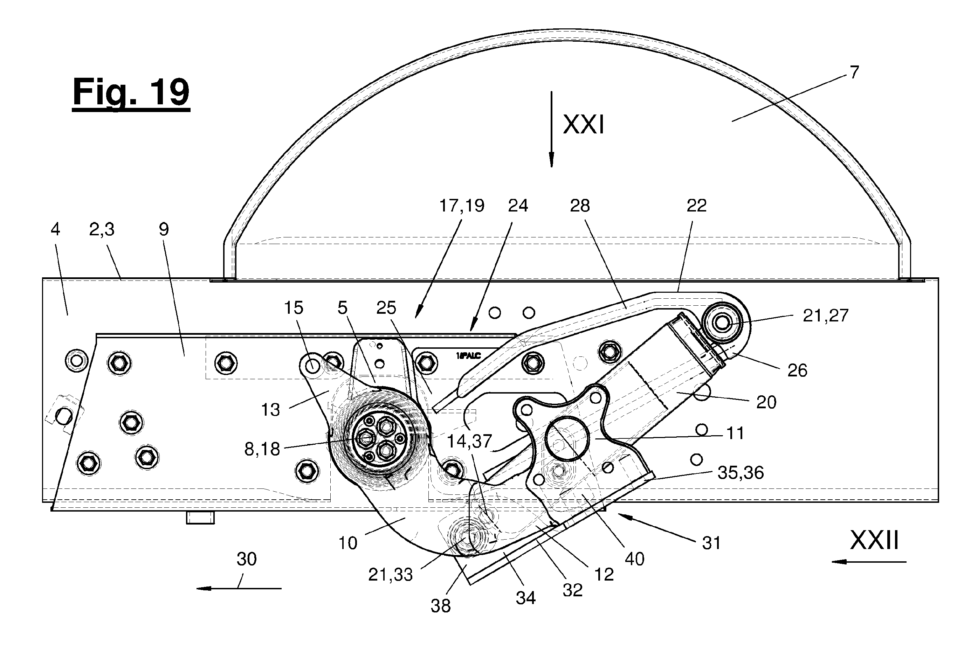

Figur 19 bis 24 zeigen eine mehrteilige Variante der Adaptionseinrichtung (31), die neben einem Anbauadapter (22) auch eine sog. Schwinghebelkonsole (32) aufweist. Mit der Schwinghebelkonsole (32) kann die Verbindung und der Anbau des Niveaureglers (20) am Radschwinghebel (10) verändert und an jeweils gegebene Fahrzeugerfordernisse angepasst werden. Figur 19 zeigt ein solches Beispiel, bei dem der Einbauraum für den Niveauregler (20) am Fahrgestell (2) nach oben begrenzt ist, wobei der Anbauadapter (22) und das obere Lagerteil (21) des Niveaureglers (20) sich unterhalb der Längsträgeroberkante befinden. In einem solchen Fall kann der Niveauregler (20) tiefer angeordnet und sein unteres Lagerteil (21) gegenüber dem Radschwinghebel (10) verlagert und mittels des Adapterteils (32) bzw. der Schwinghebelkonsole angebunden werden.

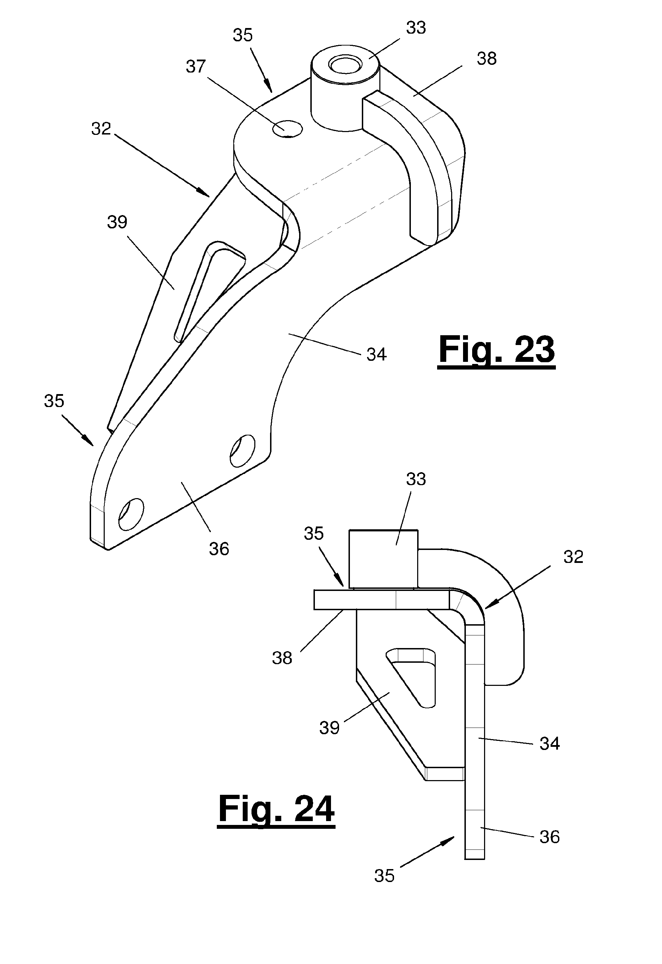

Die in Figur 23 und 24 dargestellte Schwinghebelkonsole (32) hat ebenfalls einen abgewinkelten, konsolen- oder rahmenartigen Korpus (34) mit einem Ausleger (38), einem dort angeordneten Stützelement (33) und einem Montagebereich (35) zur Befestigung am Radschwinghebel (10). Das untere Lagerteil (21) wird abweichend von den vorherigen Ausführungsbeispielen nicht mehr an der Anbindungsstelle (14) des Radschwinghebels (10), sondern hiervon distanziert an dem Stützelement (33) angebunden.

Der Montagebereich (35) kann je nach Schwinghebelausbildung unterschiedlich gestaltet und angeordnet sein. Im gezeigten Ausführungsbeispiel ist er mehrteilig und besteht aus einer Montageplatte (36), die mit dem Montagebereich oder Montageflansch (40) an der Radaufnahme (11) verbunden wird sowie aus einer Fixierung (37), die mit der Anbindungsstelle (14), beispielsweise einem dortigen Zapfen (14'), am Hebelarm (12) zu Positionier- und Stützzwecken zusammenwirkt. Hierbei können auch vorhandene Befestigungsmittel (29), z.B. Lochbilder, Schrauben etc., benutzt werden.

Der abgewinkelte und versteifte Korpus (34) wird einerseits von der Montageplatte (36) gebildet, die einen längs des Hebelarms (12) sich erstreckenden Plattenbereich und einen hieran sich anschließenden quer abgewinkelten Flansch aufweist, der den Ausleger (38) bildet und das Stützelement (33) sowie die Fixierung (37) trägt. Das Stützelement (33) kann z.B. als vorstehende Lager- oder Schraubhülse für einen Lagerstift ausgebildet und durch eine angeschlossene Rippe verstärkt werden. Die benachbarte Fixierung (37) kann z.B. als Durchgangsbohrung für den Zapfen (14') oder in anderer Weise, z.B. als Stützschale, Steckbolzen oder dgl. gestaltet sein. Der Korpus (34) weist ferner noch eine querliegende Versteifung (39) zwischen der Montageplatte (36) und dem abgewinkelten Ausleger (38) auf. Die Korpusform ist so gewählt, dass der Freiraum (16) optimal genutzt wird und der Korpus (34) den freien Kröpfungsbereich des Hebelarms (12) verwendet.

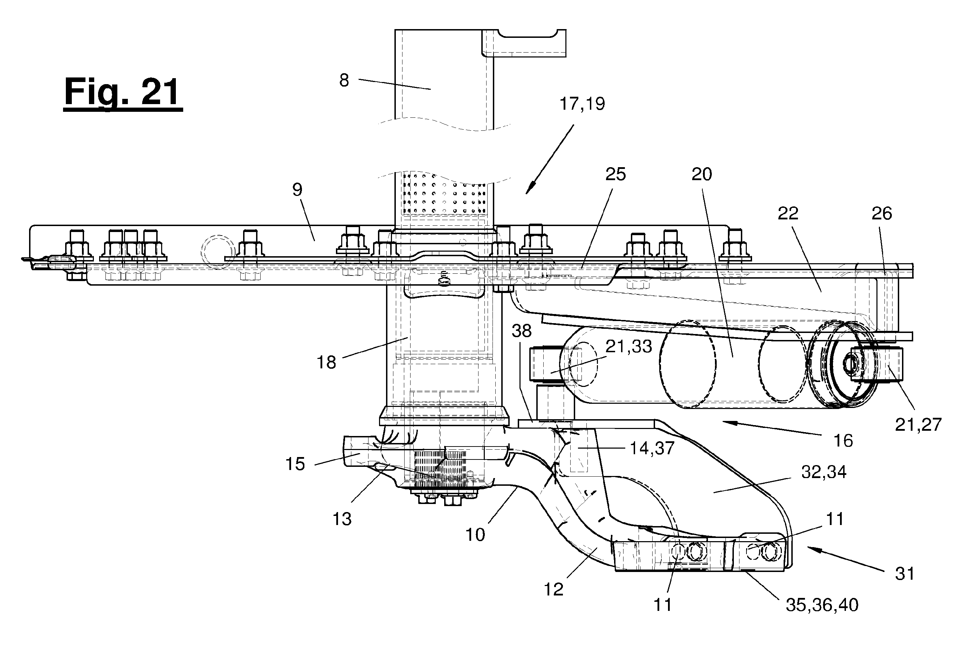

Der Hebelarm (12) kann an der Anbindungsstelle (14) in den verschiedenen gezeigten Ausführungsbeispielen eine ebene und im wesentlichen parallel zum Mittelsteg (4) ausgerichtete Wandung aufweisen. Er kann hier auch verstärkt, insbesondere verdickt sein und einen sockelartigen Ansatz haben, wie dies z.B. Figur 2 und 21 verdeutlichen. Dieser stabilisiert die Anbindungsstelle (14) und lässt Raum für die Unterbringung und die Bewegungen des Niveaureglers (20) im Freiraum (16). An der besagten ebenen Wandung kann der Ausleger (38) plan anliegen.

Der Anbauadapter (22) kann in ähnlicher Weise wie in den vorgenannten Ausführungsbeispielen ausgebildet sein und weist ebenfalls einen abgewinkelten und versteiften Korpus (34) auf, dessen Gestaltung an die Platzverhältnisse angepasst ist, sodass auch in diesem Ausführungsbeispiel der Niveauregler (20) platzsparend in der Kontur der Adaptionseinrichtung (31) aufgenommen werden kann. Der Anbauadapter (22) ist mit seiner Montageplatte (25) an der Seitenwand eines Achsträgers (9) befestigt.

In Abwandlung der gezeigten Ausführungsform kann ein Adapterteil (32) zur Niveaureglermontage am Radschwinghebel (10) auch an anderer Stelle angeordnet und in anderer Weise ausgebildet sein. Im Ausführungsbeispiel von Figur 19 bis 24 sind der Anbauadapter (22) und die Schwinghebelkonsole (32) in Fahrtrichtung vor der Achse (8) angeordnet. Alternativ kann ein Anbauadapter (23) mit Anbaulage hinter der Achse (8) vorgesehen sein, wobei ein schwinghebelseitiges Adapterteil ggf. mit dem anderen Hebelarm (13) verbunden wird und die Anbindungsstelle (15) durch einen Ausleger mit einem distanziert angeordneten Stützelement ersetzt. In einer weiteren und ebenfalls nicht dargestellten Ausführungsform kann auf einen Anbauadapter (22,23) für den Fahrgestellanbau verzichtet werden und nur ein schwinghebelseitiges Adaptionselement (32) eingesetzt werden.

Abwandlungen der gezeigten und beschriebenen Ausführungsbeispiele sind in verschiedener Weise möglich. Insbesondere können die Merkmale der verschiedenen Ausführungsbeispiele vertauscht oder in anderer weise miteinander kombiniert werden. Statt der gezeigten unitären Adaptionseinrichtung (31) bzw. deren Adaptionselementen (22,23,32) können multifunktionale Adaptionseinrichtungen bzw. Adaptionselemente verwendet werden, die mehrere unterschiedliche Anbaustellen für das Stützelement (17,33) aufweisen. Das Baukastensystem kann dahingehend variiert werden, dass es zwei, drei oder mehr unterschiedliche Niveauregler (20) gibt, denen jeweils zwei oder mehr verschiedene Adaptionseinrichtung (31) bzw. Adaptionselemente (22,23,32) oder ein bzw. zwei multifunktionale Adaptionselemente zugeordnet sind. Außerdem ist es möglich, variable Niveauregler (20) einzusetzen, bei denen die der gewünschten Niveaulage entsprechende Einfahrlänge veränderlich und einstellbar ist. Dies ermöglicht den Einsatz einheitlicher Adaptionseinrichtungen (31) bzw. Adaptionselemente (22,23,32), wobei eine Anpassung an die unterschiedlichen Einbaulagen durch Verstellung des Niveaureglers (20) erfolgt. Variabel ist ferner auch die Formgebung der Adaptionselemente (22,23,32). Entsprechendes gilt für die Anbausituation. Die Varianten von Figur 2 bis 6 und 19 bis 24 sind auch für eine Nach- oder Umrüstung geeignet und umgekehrt kann die Variante von Figur 7 bis 11 auch für eine Erstausrüstung eingesetzt werden.

### BEZUGSZEICHENLISTE

- 1: Fahrzeug
- 2: Fahrgestell, Chassis
- 3: Längsträger
- 4: Mittelsteg
- 5: Achsausschnitt
- 6: Fahrzeugrad
- 7: Radhaus
- 8: Achse, Hinterachse, Federachse
- 9: Achsträger, Achsbock
- 10: Radschwinghebel
- 11: Radaufnahme
- 12: Hebelarm lang
- 13: Hebelarm kurz
- 14: Anbindungsstelle, Anbindungspunkt
- 14': Zapfen
- 15: Anbindungsstelle, Anbindungspunkt
- 16: Zwischenraum
- 17: Feder- und Dämpfungseinrichtung
- 18: Achsfederung, Drehstabfeder
- 19: Niveauregulierungseinheit
- 20: Niveauregler, Kolben-Zylinder-Aggregat
- 21: Lagerteil, Lagerauge
- 22: Adaptionselement, Anbauadapter für Anbau hinten
- 23: Adaptionselement, Anbauadapter für Anbau vorn
- 24: Montagebereich
- 25: Montageplatte
- 26: Ausleger
- 27: Stützelement, Lagerteil
- 28: Versteifung
- 29: Befestigungsmittel
- 30: Fahrtrichtung
- 31: Adaptionseinrichtung
- 32: Adaptionselement, Schwinghebelkonsole
- 33: Stützelement, Lagerteil
- 34: Korpus
- 35: Montagebereich
- 36: Montageplatte
- 37: Fixierung
- 38: Ausleger
- 39: Versteifung
- 40: Montagebereich am Schwinghebel

## Patentansprüche

1. Niveauregulierungseinheit für ein rahmenartiges Fahrgestell (2) eines Fahrzeugs (1), insbesondere eines Straßenfahrzeugs, das eine Federachse (8) und Radschwinghebel (10) aufweist, **dadurch gekennzeichnet, dass** die Niveauregulierungseinheit (19) einen Niveauregler (20) und eine Adaptionseinrichtung (31) aufweist, die für den Anbau und die Lagerung des Niveaureglers (20) am Fahrgestell (2) und an einem Radschwinghebel (10) vorgesehen und ausgebildet ist.

2. Niveauregulierungseinheit nach Anspruch 1, **dadurch gekennzeichnet, dass** die Adaptionseinrichtung (31) ein Adaptionselement (22,23,32) aufweist, das einen Montagebereich (24,35) zur Befestigung am Fahrgestell (2) oder am Radschwinghebel (10) und einen Ausleger (26,38) mit einem Stützelement (27,33) für die Lagerung des Niveaureglers (20) aufweist.

3. Niveauregulierungseinheit nach Anspruch 1 oder 2, **dadurch gekennzeichnet, dass** ein Adaptionselement (22,23) als Anbauadapter zur Montage an einem Längsträger (3) oder einem Achsträger (9) des Fahrgestells (2) und/oder ein Adaptionselement (32) als Schwinghebelkonsole zur Montage an einem Radschwinghebel (10) vorgesehen ist.

4. Niveauregulierungseinheit nach Anspruch 1, 2 oder 3, **dadurch gekennzeichnet, dass** die Niveauregulierungseinheit (19) variabel und an unterschiedliche Fahrzeugsituationen, insbesondere unterschiedliche Fahrzeuggewichte und unterschiedliche Fahrgestellhöhenlagen, adaptierbar, insbesondere als Baukastensystem, ausgebildet ist, wobei die Niveauregulierungseinheit (19) einen einheitlichen Niveauregler (20) und unterschiedliche, jeweils angepasste Adaptionseinrichtungen (31) mit einem oder mehreren Adaptionselementen (22,23,32) aufweist.

5. Niveauregulierungseinheit nach einem der vorhergehenden Ansprüche, **dadurch gekennzeichnet, dass** ein Ausleger (26,38) eines Adaptionselements (22,23,32) in Anbaustellung über die Außenkontur eines Längsträgers (3) oder eines Achsträgers (9) reicht oder über eine Anbindungsstelle (14) an einem Radschwinghebel (10) reicht.

6. Niveauregulierungseinheit nach einem der vorhergehenden Ansprüche, **dadurch gekennzeichnet, dass** ein Montagebereich (24,35) eines Adaptionselements (22,23,32) an vorhandene Befestigungsmittel (29) am Fahrgestell (2) oder an einem Radschwinghebel (10) adaptiert ist.

7. Niveauregulierungseinheit nach einem der vorhergehenden Ansprüche, **dadurch gekennzeichnet, dass** die Adaptionseinrichtung (31) in der Breite an einen Zwischenraum (16) zwischen einem Radschwinghebel (10) und dem Fahrgestell (2) adaptiert ist und eine den Niveauregler (20) zumindest bereichsweise aufnehmende und umgebende Kontur aufweist.

8. Niveauregulierungseinheit nach einem der vorhergehenden Ansprüche, **dadurch gekennzeichnet, dass** ein Adaptionselement (22,23,32) einen Korpus (34) mit einer Montageplatte (25,36), einem Ausleger (26,38) und einer Versteifung (28,39) aufweist.

9. Niveauregulierungseinheit nach einem der vorhergehenden Ansprüche, **dadurch gekennzeichnet, dass** ein Stützeelement (27,33) als Lagerteil, insbesondere als seitlich abstehender Lagerzapfen, ausgebildet ist.

10. Niveauregulierungseinheit nach einem der vorhergehenden Ansprüche, **dadurch gekennzeichnet, dass** ein Adaptionselement (22,23,32) in seiner Formgebung variabel und an unterschiedliche Anbausituationen adaptierbar ausgebildet ist, insbesondere an den Anbau vor oder hinter einer Achse (8) des Fahrzeugs (1), an unterschiedliche zulässige Fahrzeuggewichte, unterschiedliche Fahrgestellhöhen sowie unterschiedliche Schwinghebelwinkel.

11. Niveauregulierungseinheit nach einem der vorhergehenden Ansprüche, **dadurch gekennzeichnet, dass** der Niveauregler (20) in Fahrtrichtung vor oder hinter der Achse (8) montierbar ist.

12. Niveauregulierungseinheit nach einem der vorhergehenden Ansprüche, **dadurch gekennzeichnet, dass** die Niveauregulierungseinheit (19) an eine Feder- und Dämpfungseinrichtung (17) einer Federachse (8) mit einer integrierten Achsfederung (18), insbesondere einer Torsionsfederachse, Drehstabfederachse oder Gummifederachse, angepasst ist, wobei die Federkraft der Radfederung von der Achsfederung (18) und dem Niveauregler (20) in Abhängigkeit vom Federweg gemeinsam aufgebracht wird.

13. Rahmenartiges Fahrgestell (2) eines Fahrzeugs (1), insbesondere eines Straßenfahrzeugs, mit Längsträgern (3)und mit einer Federachse (8) mit Radschwinghebeln (10), **dadurch gekennzeichnet, dass** eine Niveauregulierungseinheit (19) am Fahrgestell (2) und an einem Radschwinghebel (10) angebaut ist, wobei die Niveauregulierungseinheit (19) nach mindestens einem der Ansprüche 1 bis 12 ausgebildet ist.

14. Fahrgestell nach nach Anspruch 13, **dadurch gekennzeichnet, dass** die Grundstellung des Radschwinghebels (10) an der Achse (8) variabel ist.

15. Fahrgestell nach nach Anspruch 13 oder 14, **dadurch gekennzeichnet, dass** der Radschwinghebel (10) eine oder mehrere Anbindungsstellen (14,15) für einen Niveauregler (20) oder ein Adaptionselement (32) aufweist, wobei vorzugsweise eine Anbindungsstelle (14) an einem Hebelarm (12) im Bereich zwischen der Achse (8) und einer Radaufnahme (10) angeordnet ist.
